# EUROPÄISCHE PATENTSCHRIFT

(11) **EP 2 514 498 B1**
(45) Veröffentlichungstag und Bekanntmachung des Hinweises auf die Patenterteilung: **23.10.2019**
(21) Anmeldenummer: 12164722.6
(22) Anmeldetag: 19.04.2012
(51) Int. Cl.: B01D 25/00, B01D 25/21, B01D 25/164, B01D 25/176

(54) **Filterplatte**
Filter plate
Plaque filtrante

(30) Priorität: 20.04.2011 DE 202011005390 U
(43) Veröffentlichungstag der Anmeldung: 24.10.2012
(73) Patentinhaber: Mayer, Ludwig, 88319 Aitrach (DE)
(72) Erfinder: Mayer, Ludwig, 88319 Aitrach (DE)
(74) Vertreter: Patentanwälte Olbricht, Buchold, Keulertz Partnerschaft mbB

(56) Entgegenhaltungen:
- EP-A1- 2 213 354
- EP-A2- 0 175 527
- WO-A1-96/24423
- GB-A- 1 459 099
- GB-A- 1 601 903
- JP-A- H11 319 421
- JP-A- 2010 137 223

## Beschreibung

Die Erfindung betrifft eine Filterplatte, insbesondere als Teil einer, aus vielen flächig nebeneinander angeordneten Filterplatten bestehenden Filterpresse, wobei die Filterplatte eine Filtertuchanordnung trägt. Die Erfindung betrifft des Weiteren eine Filterpresse.

Die vorgenannten Filterplatten und Filterpressen werden bei der Filtration zum Beispiel von Flüssigkeiten, die Verunreinigungen oder andere Schwebstoffe mit sich führen, eingesetzt.

Für die Filtration von Flüssigkeiten werden derartige Filterpressen eingesetzt, die zum Beispiel als Kammerfilterpressen oder auch als Membranfilterpressen bezeichnet werden. Es handelt sich hierbei um Vorrichtungen, um Flüssigkeiten, die Schwebstoffe mit sich führen, zu reinigen beziehungsweise zu trennen. Dabei ist eine Filterpresse aus einer Vielzahl, flächig nebeneinander angeordneten Filterplatten gebildet, die unter Druck dicht zusammengepresst werden. In jeder einzelnen Platte ist je mindestens ein Filtertuch gespannt, welches die Partikel zurückhält. Je nach Filtrationsprozess ist dabei entweder der in dem Filtertuch zurückgehaltene Filterkuchen oder das durch das Filtertuch gereinigte Filtrat für die weitere Bearbeitung von Interesse.

Die Ausgestaltung eines Filtertuches ist in dieser Anmeldung im Zusammenhang mit dem Einsatz bei einer Filterpresse beschrieben, ohne aber die Erfindung auf diesen Anwendungsbereich beschränken zu wollen.

Um das Filtertuch zuverlässig an der Filterplatte zu befestigen, ist die Konstruktion so ausgebildet, dass im Dichtrand der Filterplatte umlaufend eine Befestigungsnut vorgesehen ist, in welcher eine Wulst des Filtertuches eingesteckt ist. Dabei ist es bekannt, die Wulst durch einen umgeschlagenen Randbereich des Filtertuches zu bilden, welcher vernäht ist. In dem durch den umgeschlagenen Bereich sich bildenden Aufnahmeraum (oder Saum) wird eine Kordel, ein O-Ring oder ähnliches eingeführt, wobei hierzu natürlich auch mehrere einzelne Elemente, die in den Rand eingelegt werden, vorgesehen sein können.

Im Stand der Technik ist bekannt, im Saumbereich die Wulst durch ein Vernähen des Randbereiches des Filtertuchgewebes zu erzeugen. Das Nähen, das heißt das Durchstecken eines Fadens durch das Filtertuchgewebe, wird bei den Filtrationsvorrichtungen aber auch an anderer Stelle eingesetzt. So sind aus mehreren Filtertüchern bestehende Filtertuchanordnungen bekannt, die ihrerseits ebenfalls durch entsprechende Verbindungsnähte verbunden sind.

Diese Filtertuchanordnungen werden von den gattungsgemäßen Filterplatten gehalten. Für den Zu- beziehungsweise Ablauf der unfiltrierten beziehungsweise filtrierten Flüssigkeit ist an der Filterplatte mindestens eine, die Dicke der Filterplatte durchdringende Öffnung vorgesehen. Natürlich sind die verschiedenen Öffnungen an den einzelnen Filterplatten immer an der gleichen Position, um in dem Paket von Filterplatten eine sich übersämtliche Filterplatten erstreckende Zu- oder Ableitung zu ergeben. Insbesondere ist an der Öffnung, die den Einlauf bildet, ebenfalls für eine Trennung der filtrierten und unfiltrierten Phase zu sorgen. Es ist daher im Bereich des Einlaufes auch ein Filtertuch, welches oftmals als Tuchhals beschrieben wird, angeordnet.

Im Stand der Technik sind dabei sowohl Zentraleinläufe wie auch Eckeinläufe bekannt, beim Zentraleinlauf befindet sich der Einlauf im Zentrum, beim Eckeinlauf bevorzugt im Rand- oder Eckbereich der Platte.

Bei der herkömmlichen Ausgestaltung der Filtertücher beziehungsweise Filtertuchanordnungen werden die notwendigen Verbindungen durch Nähte, die mit Nadel und Faden hergestellt werden, erstellt. Dieses Verbindungsverfahren hat den Nachteil, dass die Nähnadel das Filtergewebe beschädigt. Die Einstichlöcher verschlechtern den Trenneffekt des Filtergewebes signifikant. Des Weiteren ist zu beachten, dass ein Teil des Fadens auf der Gewebeoberfläche der einlaufenden Suspension zugewandt ist. Aufgrund der erheblichen mechanischen Einwirkung, durch den abrasiven Effekt der einströmenden Flüssigkeit, kommt es zum Verschleiß des Fadens. Hierdurch sind die bekannten Filtertücher beziehungsweise Filtertuchanordnungen bereits nach kurzer Betriebszeit nicht mehr einsetzbar, weil sich Fäden beziehungsweise Nähte lösten. Ein Stillstand des gesamten Filtrationsprozess ist die Folge, da Filtertücher beziehungsweise Filtertuchanordnungen zu wechseln sind. Verschleiß tritt insbesondere auch im Bereich des Tuchhalses auf, also demjenigen Filtertuch, welches im Zentral- oder Eckeinlauf angeordnet ist, da hier auf verhältnismäßig kleinem Durchmesser die höchste mechanische Belastung durch dauerhaft tangentiale Strömung der mit den Schwebstoffen versetzten und daher abrasiven "verunreinigten" Flüssigkeit erfolgt.

Das Dokument EP 0 175 527 A1 zeigt eine Filterpresse mit einer Reihe von Filterplatten. Jede Platte weist ein Paar von Unterstützungsarmen auf, welche an jeweiligen Kanten schwenkbar sind, wobei korrespondierende Arme von benachbarten Platten an ihren jeweiligen Enden schwenkbar verbunden sind. Eine jeweilige horizontale Stange ist an jeder Fläche von jeder Platte aufgehängt, und zwar mittels zweier Federn, welche von zwei Armen getragen werden. Ein jeweiliges Filtertuch umgibt eine jeweilige Platte, wobei es sich von einer Stange zu einer anderen über zwei Filterflächen der Platte erstreckt und den Boden der Platte mit seinem Mittelbereich kontaktiert.

Das Dokument JP H11 319421 A zeigt ein Filtertuch für eine Filterpresse, welches zum Abdecken der vorderen und hinteren Filterflächen einer Filterplatte vorgesehen ist.

Das Dokument WO 96/24426 A1 zeigt eine Filtervorrichtung zur Verwendung in einer Filterpresse mit einer Filterplatte, welche eine Öffnung hat, und mit Filtertüchern mit ähnlich ausgeführten Öffnungen, wobei die Filtertücher auf jeweiligen entgegengesetzten Seiten der Filterplatte angeordnet sind. Die Filtertücher sind mit der Filterplatte durch Fügeverfahren verbunden. Dabei zeigt dieser Stand der Technik Nuten in der Filterplatte, die zur Aufnahme von an den Filtertüchern befestigten Halteelementen dienen.

Das Dokument JP 2010 137223 A zeigt eine Vorrichtung zum Dehydratisieren und Trocknen von Schlamm mit Filterplatten und Filtertüchern.

Ausgehend von diesem Stand der Technik ist es Aufgabe der vorliegenden Erfindung, bekannte Filterplatten bzw. Filterpressen derart weiter zu entwickeln, dass diese eine höhere Standzeit aufweisen.

Zur Lösung dieser Aufgabe geht die Erfindung aus von einer Filterplatte mit einem Filtertuch, gemäß Anspruch 1 aus.

Bei der ebenfalls vorgeschlagenen Filtertuchanordnung, welche aus zumindest einem ersten und einem zweiten Filtertuch besteht, wird vorgeschlagen, dass das erste und zweite Filtertuch zumindest abschnittsweise, insbesondere in deren Rand-bereichen, übereinander angeordnet sind und zumindest teilweise durch eine Schweißverbindung miteinander verbunden sind.

Im Sinne der Erfindung ist bei einer Schweißverbindung eine unlösbare Verbindung der übereinander angeordneten Randbereiche des Filtertuches unter Anwendung von Wärme oder Druck zu verstehen. Ebenfalls umfasst ist das Verbinden unter Zuhilfenahme von Schweißzusatzwerkstoffen. Durch Schweißen werden die übereinanderliegenden Randbereiche des Filtertuches dauerhaft und ohne Hinzunahme weiterer Hilfsmittel, wie beispielsweise Klebstoffen oder Fäden, miteinander verbunden. Die Schweißverbindung oder Schweißverbindungsschicht kann auf einfache Art und Weise ausgebildet werden. Durch Verwendung einer Schweißverbindung zur Erstellung des Randbereiches des erfindungsgemäßen Filtertuches kann eine signifikante Reduzierung der Herstellungszeit- und Kosten bezüglich der Filtertücher erreicht werden. Durch die nur schwer trennbare Verbindung, die im Schweißvorgang erstellt wird, kommt es im Randbereich nicht zu Verschleißerscheinungen, wie dies beispielsweise durch Abrasion der Fäden beziehungsweise durch chemisches Auflösen oder Angreifen einer Klebeverbindung der Fall sein kann.

Neben der Verwendung von Wärme oder Druck zur Herstellung der Schweißverbindung können selbstverständlich sämtliche weiteren Schweißverfahren eingesetzt werden, um eine Schweißverbindung zu erzeugen.

Bei einer erfindungsgemäßen Filtertuchanordnung können als erstes beziehungsweise zweites Filtertuch herkömmlich hergestellte, also im Saumbereich vernähte Filtertücher zum Einsatz kommen. Es können aber auch Filtertücher verwendet werden, die an ihrem Rand-, also im Saumbereich, durch eine Schweißverbindung eine Wulst ausbilden. Somit können bei der erfindungsgemäßen Filtertuchanordnung sowohl herkömmliche, nach dem Stand der Technik gefertigte Filtertücher, wie auch nach der hier vorliegenden Erfindung gefertigte Filtertücher oder Mischformen daraus zum Einsatz kommen.

Die Erfindung ermöglicht es, die verhältnismäßig leicht verschleißende, nicht dauerhafte Nähverbindung aufzugeben und an ihrer Stelle eine andere, dauerhaft wirkende, durch die abrasive Umgebung wenig oder kaum angreifbare Verbindungstechnik einzusetzen. Ein wesentlicher Vorteil der Erfindung liegt insbesondere darin, dass die Verbindung- beziehungsweise Verbindungsschicht durch das Filtertuch selbst vor den abrasiven Partikeln in der Flüssigkeit geschützt ist, da die Verbindungsschicht entweder zwischen den beiden Filtertuchbereichen eines Filtertuches oder zwischen den beiden Filtertüchern bei einer Filtertuchanordnung geschützt angeordnet ist.

Es wird als günstig angesehen, wenn die beiden zuvor beschriebenen Filtertuchbereiche durch zueinander insbesondere in der Fläche des Filtertuches beabstandet angeordnete, jeweils einzelne Schweißverbindung miteinander verbunden sind. Es wird so eine wesentlich dauerhaftere Verbindung zwischen den Filtertuchbereichen geschaffen, die die Widerstandskraft gegen Abrasion weiter verbessert. Es besteht hierbei alternativ auch die Möglichkeit, dass nur in besonders beaufschlagten Bereichen eine Verwendung von mehreren nebeneinander liegenden Schweißverbindung stattfindet. Es liegen dann Filtertuchbereiche vor, die zueinander (seitlich) beabstandet angeordnete Schweißverbindung aufweisen. Daneben sind, beispielsweise im Bereich des Tuchhalses, Filtertuchbereiche vorgesehen, die durch mehrere zueinander beabstandet angeordnete, jeweils einzelne Schweißverbindungen miteinander verbunden sind.

Erfindungsgemäß wird eine Schweißverbindung vorgeschlagen. Die Erfindung ist bei der Ausgestaltung der Schweißverbindung sehr variabel realisierbar. Es können dabei sowohl bekannte Schweißverfahren wie auch kominbierte Schweiß-Klebe-Verfahren zur Herstellung einer Verbindung eingesetzt werden. Bei einer Schweißung wird das Material des Filtertuches beziehungsweise des Filtertuchgewebes durch Wärmeeinwirkung derart aufgeschmolzen, dass sich das Material der Filtertuchbereiche beziehungsweise Abschnitte von übereinander angeordneten Filtertüchern derart gegenseitig durchdringt, so dass sich ein einstückiger, stoffschlüssiger Verbund ergibt und eine mechanisch belastbare Verbindung entsteht. Es kann dabei auch zusätzliches Material in das Filtertuchgewebe eingebracht werden, um so das Schweißergebnis und die Haltbarkeit der Schweißverbindung zu definieren werden.

Beim Verschweißen bildet sich zwischen den beiden zu verschweißenden Filtertüchern beziehungsweise Filtertuchabschnitten- oder bereichen eine Schicht aus, in der sich das zu verschweißende Material des Filtertuchgewebes konzentriert. Alternativ ist es möglich, dass das Verschweißen unter Einbringen von zusätzlichem verschweißbarem Material oder Schweißhilfsstoffen erfolgt.

Beim Einsatz einer Klebeverbindungsschicht würde zwischen den beiden Filtertuchbereichen beziehungsweise den beiden übereinander angeordneten Filtertüchern ein Klebstoffbereich aufgebracht, dessen klebende Wirkung die beiden miteinander zu verbindenden Filtertücher beziehungsweise Filtertuchbereiche verklebt.

Es sind auch kombinierte Verbindungsverfahren bekannt, die sowohl eine verschweißende wie auch eine beispielsweise heiß verklebende Komponente aufweisen. Auch in einem solchen Verfahren hergestellte Schweiß-Klebe-Verbindungen sind von der Erfindung umfasst, da hier der Aspekt des Verschweißens im Vordergrund steht und die klebende Komponente lediglich als Schweißhilfsstoff zu sehen ist.

Zum Beispiel ist es vorgesehen, hier eine Schlichte auf den Fäden, die das Gewebe bilden vorzusehen, wobei die Schlichte in geeigneter Weise die Herstellung einer Schweißverbindung unterstützt, begünstigt oder vermittelt.

Eine Weiterbildung des Vorschlages sieht vor, dass anstelle der Verwendung von zueinander beabstandet angeordneten Schweißverbindungen eine durchgehende Schweißverbindung Verwendung findet. Diese hat den Vorteil, dass die Schweißverbindung leichter, insbesondere in einem einzigen Arbeitsgang, erstellt werden kann. Zudem ist die erzielbare Verbindungsfläche insgesamt größer ausgebildet.

Die Erfindung weist mindestens zwei verschiedene Verwendungsbereiche von Schweißverbindungen auf. Zum einen zu nennen ist die randseitige Verbindung (der Begriff "Verbindung" beschreibt umfassend die Schweißverbindung), um hier einen Saum zu bilden. Als weitere Schweißverbindung ist eine Verbindung des Tuchhalses (welcher zum Beispiel in einer Durchgangsöffnung angebracht ist) mit dem flächig angeordneten Filtertuch zu einer Filtertuchanordnung vorgesehen. Auch diese wird erfindungsgemäß in einer Schweißverbindung ausgeführt, um die eingangs beschriebenen Vorteile zu erzielen.

Für die Ausbildung einer Klebeverbindungsschicht besteht die Möglichkeit, eine Kaltklebeverbindungsschicht oder eine Heißklebeverbindungsschicht vorzusehen. Insbesondere bei einer Heißklebeverbindungsschicht wird der zwischen den Filtertuchbereichen beziehungsweise Filtertuch angeordnete Klebstoff erhitzt, wodurch sich eine entsprechende Verflüssigung des Klebstoffes ergibt und woraus ein verbesserter insbesondere formbeziehungsweise stoffschlüssiger Verbund des Klebstoffes mit dem jeweiligen Gewebe des Filtertuchs beziehungsweise Filtertuchbereiches resultiert.

Auch für die Bildung einer Schweißverbindungsschicht sind nach dem erfindungsgemäßen Vorschlag verschiedenste Schweißverfahren einsetzbar. Hierzu zählen zum Beispiel Spiegelschweißen, Ultraschallschweißen, Hochfrequenzschweißen, Reibschweißen oder ähnliches.

In einer als günstig angesehenen Ausführungsform ist das Filtertuch dadurch gekennzeichnet, dass es in dem umgeschlagenen Flächenbereich einen Aufnahmeraum bildet, welcher zur Aufnahme mindestens eines, insbesondere auch elastischen Aufnahmekörpers dient.

Dabei wird der umgeschlagene Flächenbereich zum Beispiel von den miteinander zu verbindenden Filtertuchbereichen des Filtertuches begrenzt. Eine derartige Aufnahme ist bevorzugt im Saumbereich des Filtertuches vorgesehen. Der hier durch Übereinanderlegen der Filtertuchbereiche ausgebildete Aufnahmeraum dient dann beispielsweise als Aufnahme für eine Kordel oder einen O-Ring in dem Saum. Der vom Tuchmaterial umgebene Bereich dient dann für das Einsetzen in beispielsweise Befestigungsnuten für das Filtertuch in einer Kammerfilterplatte oder dergleichen.

Neben dem Einsetzen oder Einlegen einer Kordel oder eines O-Ringes, das heißt, eines einstückigen Elementes oder Vollkörpers, besteht auch die Möglichkeit, dass hier ein schlauchartiger Aufnahmekörper verwendet wird. Auch vorgesehen ist die Verwendung eines einstückig wulstprofilartigen Aufnahmekörpers, der in den Aufnahmeraum eingesetzt beziehungsweise vor der Bildung des Aufnahmeraums an der entsprechenden Position des Filtertuchs beziehungsweise am Filtertuchbereich angeordnet wird. Durch Umschlagen der Randbereiche wird dann dieser Aufnahmekörper in dem Aufnahmeraum festgelegt. Während die Erfindung in einer Ausführungsform vorsieht, dass in dem Aufnahmeraum ein schlauchartiger oder einstückiger, beispielsweise wulstprofil- oder o-ringartiger Aufnahmekörper angeordnet wird, sieht eine weitere bevorzugte Ausführungsform vor, dass in dem Aufnahmeraum eine Vielzahl voneinander getrennter, wulstprofilartiger Aufnahmekörper angeordnet ist. Bei dem Aufnahmekörper handelt es sich dann beispielsweise um Abschnitte eines schlauchartigen oder wulstprofilartigen Aufnahmekörpers. Hierbei kann es sich um ein Vollmaterial oder ein schlauchartiges Material handeln, dessen Abschnitte in den Aufnahmeraum eingesetzt werden. Auch bei der Verwendung von voneinander getrennten Aufnahmekörpern oder Aufnahmekörperabschnitten besteht selbstverständlich die Möglichkeit, dass diese zunächst auf die Randbereiche des Filtertuches aufgelegt werden, die Randbereiche umgeschlagen und die übereinanderliegenden Bereiche miteinander verschweißt werden, um den letztendlichen wulstartig ausgebildeten Randbereich des Filtertuches auszubilden.

Die umgeschlagenen Randbereiche des Filtertuchs müssen nicht zwangsläufig einen Aufnahmeraum für eine Kordel oder einen O-Ring bilden. Vielmehr besteht in einer als vorteilhaft angesehenen Ausführungsform die Möglichkeit, dass der umgeschlagene Randbereich des Filtertuches eine für Befestigungszwecke bildende Wulst bildet. Diese Wulst dient dann zum Einsetzen in eine Befestigungsnut für das Filtertuch die an der Filterplatte vorgesehen ist. Hierbei wird die Herstellung des Filtertuches wesentlich vereinfacht, da der umlaufende Saum nicht mehr genäht, sondern verschweißt beziehungswseise verklebt wird. Auch in diesem Zusammenhang ist es unerheblich, ob eine durchgehende oder eine unterbrochene Schweißnaht beziehungsweise Klebenaht verwendet wird. Entscheidend ist die Ausbildung der Wulst, die die Anforderungen an die exakte Positionierung des Filtertuches erfüllt.

Ist hier eine Verbesserung von Dichteigenschaften oder der Haltbarkeit des Randbereiches beziehungsweise eine Verbesserung der Einsetzbarkeit des Randbereiches in eine umlaufende Nut einer Filterplatte vorgesehen, so wird es als empfehlenswert angesehen, wenn der in der Wulst vorgesehene Aufnahmekörper aus einem elastischen Material, inbesondere aus Gummi, Silikon oder einem elastischen Thermoplasten besteht. Die zuvor genannten Materialien haben den Vorteil, dass diese sich aufgrund ihrer elastischen Ausbildung in einfacher Art und Weise Befestigungsnuten für das Filtertuch einsetzen lassen und, aufgrund der guten Passform, optimal an diese Befestigungsnuten einpassen.

Der mit dem erfindungsgemäßen Filtertuch verwendbare schlauch- oder wulstprofilartige Aufnahmekörper besteht insbesondere aus einem Grundkörper, dessen Dicke zumindest in Richtung rechtwinklig zum flächigen Filtertuch gesehen größer, insbesondere zweimal, bevorzugt mindestens drei bis viermal größer ist, als die Dicke des Filtertuchgewebes. Es kann aufgrund dieser Ausführung eine randständige Wulst beziehungsweise ein Saumbereich ausgebildet und eine in eine Nut einsetzbare Materialverdickung erzielt werden. Der besonders verschleißanfällige Verschweißungsbereich wird durch die zuvor genannte Ausführung des Wulstprofiles zusätzlich verstärkt und verbessert und weist damit eine erhöhte Haltbarkeit auf. Aufgrund dessen, dass der schlauchartige oder wulstprofilartige Aufnahmekörper unabhängig vom Filtertuch ist, besteht die Möglichkeit, unterschiedlichste Ausführungs- und Ausbildungsformen der Wulst zur Verfügung zu stellen, um so standardisierte Filtertücher an eine Vielzahl von Filterplatten beziehungsweise Filterpressen einzupassen und anpassen zu können. Dadurch, dass dann jeweils eine standardisierte Wulst verwendet wird, wird auch eine exakte Positionierbarkeit des Filtertuches, zumindest in den Randbereichen möglich, wodurch die Filterleistung der mit den erfindungsgemäßen Filtertüchern ausgestatteten Filtriervorrichtungen weiter verbessert werden kann.

Das Filtertuchgewebe besteht bevorzugt aus einem thermoplastischen Werkstoff, insbesondere aus Polypropylen (PP), Polyethylenterephthalat (PET), Polyamid oder ähnlichen Materialien beziehungsweise geeigneten Materialien mit vergleichbaren Eigenschaften. Die Verwendung eines thermoplastischen Werkstoffes hat den Vorteil, dass eine Schweißverbindung in einfacher Art und Weise, beispielsweise durch Erhitzen des Materials, beispielsweise mit einem Schweißspiegel oder dergleichen erfolgen kann und keine zusätzlichen Materialien zwischen die zu verschweißenden Schichten beziehungsweise Filtertuchbereiche eingebracht werden müssen, beziehungsweise ohne dass das Filtertuch einer chemischen oder sonstigen Behandlung unterzogen werden muss. Die erfindungsgemäße Ausbildung des Filtertuches kann somit in einfacher und kostengünstiger Art und Weise, lediglich durch mechanische beziehungsweise thermomechanische Behandlung des Filtertuchmaterials gebildet werden.

In einer alternativen, als günstig angesehenen Ausführungsform des Filtertuches ist vorgesehen, dass das Filtertuchgewebe aus organischen Fasern, wie Baumwolle oder Glas- beziehungsweise Kohlefasern besteht. Da hierbei eine Verschweißung des Materials nicht ohne weiteres möglich ist, erweist es sich insbesondere als günstig, wenn zur Bildung der Schweiß- verbindung eine Schweißverbindungsschicht als die Verbindung begünstigende beziehungsweise ermöglichende Beschichtung oder Ausrüstung des Gewebes vorgesehen wird. Hierzu kann dann in dem zu verschweißenden Bereich vor der Ausbildung der Schweißverbindung eine Beschichtung des Materials durchgeführt werden. Sofern es für die Filtrationsleistung des Filtertuches nicht als nachteilig angesehen wird, kann auch das gesamte Material mit dieser begünstigenden Beschichtung oder Ausrüstung versehen werden, die dann in geeigneter Art und Weise, beispielsweise durch chemische oder mechanische beziehungsweise thermische Beaufschlagung bereichsweise, insbesondere im Bereich der zu verbindenden Tuchabschnitte aktiviert wird und eine dauerhafte, unlösbare Verbindung der Filtertuchbereiche vermittelt.

Die Erfindung umfasst des Weiteren eine Filtertuchanordnung, bestehend aus zumindest einem ersten und einem zweiten Filtertuch. Die beiden für die Filtertuchanordnung verwendeten Filtertücher sind bevorzugt zumindest abschnittsweise übereinander angeordnet. Eine derartige Übereinanderanordnung findet dabei insbesondere im Randbereich statt. Die übereinander angeordneten Bereiche werden dabei zumindest teilweise durch eine Schweißverbindung miteinander verbunden, das heißt, miteinander verschweißt beziehungsweise stoffschlüssig verbunden. Als besonders günstig erweist es sich hierbei, wenn die beiden flächigen Filtertücher der Filtertuchanordnung über ein weiteres, schlauch- oder zylinderförmig ausgebildetes Filtertuch, das gleichzeitig den Tuchhals bildet, verbunden sind. Die flächigen Filtertücher beziehungsweise deren Randbereiche können dann auf jeweils gegenüberliegenden Seiten einer Filterplatte in die hier randseitig vorgesehenen Nuten eingesetzt werden. Das Filtertuch im Tuchhals ist in erfindungsgemäßer Art und Weise, insbesondere durch Verschweißen, mit den beiden flächigen Filtertüchern verbunden und stellt die Verbindung zwischen den beiden Tüchern zur Verfügung. Bei der Ausbildung der Filtertuchanordnung gemäß der vorliegenden Erfindung bietet die Verbindung durch Verschweißen besondere Vorteile, da zum einen eine dauerhafte und hoch abrasionsresistente Verbindung geschaffen wird, zum anderen kann auf einfache Art und Weise eine Verbindung der Filtertücher hergestellt und kostengünstig gebildet werden, ohne das Material zu stark anzugreifen. Es besteht auch die Möglichkeit, dass die Filtertücher der Filtertuchanordnung in den Randbereichen verbunden sind, wobei hier dann ebenfalls eine Schweißverbindung vorgesehen ist, die die beiden Filtertücher zumindest abschnittsweise verbindet.

Das Filtertuch, das hier ein Teil der Filtertuchanordnung ist, besteht aus einem Filtertuchgewebe. Ein Gewebe ist dabei ein textiles Flächengebilde aus mindestens zwei sich winklig, insbesondere rechtwinklig, oder nahezu rechtwinklig kreuzenden Fadensystemen. Die Fäden des Filtergewebes sind zum Beispiel Fäden oder Fasern aus organischem Material wie zum Beispiel Baumwolle oder andere organische Materialien, das Material kann aber auch aus Kunststoffen wie Polypropylen (PP), Polyethylenterephthalat (PET), Polyamid oder anderen ähnlichen Kunststoffen bestehen, es können aber auch Glas-, Keramik- oder Kohlefasern für das Material der Fäden für das Filtertuchgewebes Verwendung finden. Ein wesentlicher Vorzug der Erfindung liegt insbesondere darin, dass das Filtertuchgewebe als flächiges Material, insbesondere als Ballen oder Ballenware zur Verfügung steht und eine freie Konfektionierbarkeit möglich ist. Daher ist das Filtertuch nach der Erfindung, insbesondere aber auch die Filtertuchanordnung nach der Erfindung variabel und kostengünstig zu fertigen und grenzt sich somit von anderen Filteranordnungen ab, bei welchen zum Beispiel der Tuchhals als gespritzter Formkörper (aus Kunststoff) besteht und für jede notwendige Tuchhalsform (Durchmesser, Länge) eine seperate Form für das Spritzen oder Gießen des Formkörpers notwendig ist. Diese Lösung nach dem Stand der Technik ist sehr aufwendig und teuer, weswegen das erfindungsgemäße Vorgehen erhebliche Kostenvorteile zeigt. Die bildbaren Filtertücher beziehungsweise Filtertuchanordnungen sind problemlos an jede Geometrie der Filterplatte anpassbar. Der Tuchhals wird dabei so gebildet, dass aus einem Filtertuchgewebestreifen ein zylindrischer Körper gebildet wird, bei welchem zum Beispiel die endseitigen Filtertuchbereiche den ersten und zweiten Filtertuchbereich bilden, übereinander angeordnet und durch eine Schweißverbindung miteinander verbunden werden. Diese erste Schweißverbindung verläuft dann zum Beispiel achsparallel an der Mantelfläche des Tuchhalses. Entlang des Umfanges des Tuchhalses erfolgt dann ein Anschluss des Tuchhalses an die flächig ausgelegten Filtertücher, wobei auch hier wiederum der erfindungsgemäße Vorschlag für einen Anschluss des Tuchhalses einsetzbar ist. Es entsteht so eine mechanisch sehr gut belastbare, von dem abrasiven Medienstrom durch zumindest eine Filtertuchlage geschützte Schweißverbindung umfassende Filtertuchanordnung, die kostengünstig und flexibel herstellbar ist.

Gleichfalls von der Erfindung umfasst ist eine Filterplatte. Diese ist insbesondere als Teil einer zwei oder mehr, flächig nebeneinander angeordnete Filterplatten aufweisende Filterpresse vorgesehen. Die Filterplatte trägt dabei günstigerweise eine Filtertuchanordnung wie zuvor beschrieben. Die erfindungsgemäße Filterplatte weist eine mindestens die Dicke der Filterplatte durchdringende Öffnung auf. Im Bereich der Öffnung der Filterplatte ist ein erstes Filtertuch der Filtertuchanordnung angeordnet und bildet hier den Tuchhals aus, der die Öffnung in der Filterplatte vollständig überdeckt. Ein zweites Filtertuch der Filtertuchanordnung ist im wesentlichen parallel zur flächigen Erstreckung der Filterplatte vorgesehen. Dieses zweite Filtertuch bedeckt die gesamte Filterplatte und ist an den Rändern in dort vorgesehen Nuten oder sonstigen Ausnehmungen eingesetzt und schließt hierbei dicht ab. Die Verbindung zwischen erstem und zweitem Filtertuch, das heißt zwischen dem ersten als Tuchhals und dem flächig ausgebildeten zweiten Filtertuch, wird hierbei insbesondere durch Verschweißen hergestellt, wobei die zuvor genannten Schweißverbindungen in geeigneter Weise an den Filtertüchern angeordnet sind, um eine Verbindung herzustellen beziehungsweise zu ermöglichen.

Eine als vorteilhaft angesehene Ausführungsform der Filterplatte sieht vor, dass beiderseits der Filterplatte je ein zweites Filtertuch angeordnet ist. Das erste, in der Öffnung der Filterplatte angeordnete Filtertuch, verbindet dabei die beiden zweiten Filtertücher und ist mit diesen verschweißt, da die hierbei übereinanderliegenden Bereiche der Filtertücher zumindestens teilweise eine Schweiß- verbindung aufweisen, um miteinander verbunden zu werden beziehungsweise verbindbar zu sein. Die Filterplatte ist in der zuvor genannten Ausführungsform beidseitig durch eine Filtertuchanordnung bedeckt, so dass in einfacher Art und Weise die einzelnen Filterplatten zum einen mit dem Filtertuch bestückt werden können, zum anderen die Filtertuchanordnung in der jeweiligen Filterpresse gebildet werden kann, indem die mit den Filtertuchanordnungen versehenen Filterplatten hier zusammengestellt oder zusammengesteckt werden. Die besonders verschleißanfälligen, da dem gegebenenfalls abrasiven Material ausgesetzten Bereiche des Filtertuches sind durch die erfindungsgemäße Art und Weise der Verbindung zwischen den Filtertüchern verbunden. Die somit zur Verfügung gestellte Filtertuchanordnung, wie auch die damit ausgestattete Filterplatte weist den Vorteil auf, dass hier ein kostengünstig herstellbares, dabei jedoch besonders langlebiges und hochwiderstandsfähiges Filtertuch zur Verfügung gestellt wird, das zum einen bereits bei der Herstellung zu einer signifikanten Kostenersparnis führt und zum anderen den Vorteil hat, dass ein geringerer Wartungsaufwand anfällt, da die Filtertücher seltener ausgetauscht werden müssen, das heißt eine höhere Standzeit aufweisen.

Die Filterplatte weist in ihrem Randbereich eine Nut auf. In diese Nut wird die Wulst des Filtertuches, die hier in der zuvor genannten Art und Weise ausgebildet werden kann, eingesetzt und schafft damit eine Verbindung zwischen der Filterplatte und dem Filtertuch. Auch hier bietet die Ausbildung der Wulst, wie zuvor beschrieben, signifikante Vorteile bezüglich der Haltbarkeit des gesamten Filtertuches. Da in den, im Randbereich der Filterplatte eingelegten beziehungsweise eingesetzten Filtertuchabschnitt eine hohe Zugkraft eingetragen wird, bietet die nach Art einer Verschweißung ausgebildete Verbindung beziehungsweise Bildung der Wulst auch hier entscheidende Vorteile bezüglich der Haltbarkeit. Es werden, anders als im Stand der Technik, keine Nähte beaufschlagt, die im ohnehin bereits durch die Nadelstiche geschwächte Material angeordnet sind. Ein Reißen des Materials wird somit wirkungsvoll unterbunden. Die Tatsache, dass eine Schweißverbindung ausgebildet ist, führt zu einer nahtlosen, das heißt leckagefreien Ausbildung der Wulst beziehungsweise Verbindung der Filtertuchbereiche, die zudem noch Vorteile bei der Zugkraftableitung aufweist.

Die Erfindung verfügt über eine Filterplatte mit einer Filtertuchanordnung, wobei die Filterplatte mindestens eine die Dicke der Filterplatte durchdringende Öffnung aufweist und im Bereich der Öffnung ein erstes Tuch der Filtertuchanordnung angeordnet ist und im Wesentlichen parallel zur flächigen sich erstreckenden Filterplatte ein zweites Filtertuch der Filtertuchanordnung vorgesehen ist.

Gleichzeitig umfasst die Erfindung aber auch eine Lösung, bei welcher eine Filterplatte mit nur einem erfindungsgemäßen Filtertuch ausgestattet ist, das heißt, dass das Filtertuch zum Beispiel den speziell ausgebildeten Saum- oder Randbereich aufweist und gegebenenfalls unter Verwendung des wie ziell vorgeschlagen ausgebildeten Wulstprofils in einer Nut der Filterplatte gehalten ist. In diesem Fall umfasst die Filterplatte keine Filtertuchanordnung sondern nur das Filtertuch, konstruktiv wird dies zum Beispiel dadurch gelöst, dass ein Eckeinlauf vorgesehen ist, das heißt Einlaufbeziehungsweise Auslauf außerhalb des Filterraumes sind und zum Beispiel über parallel zur Filterplatte verlaufende Bohrungen eine Verbindung vom Filterraum zu dem Eck- Ein- beziehungsweise Ablauf vorgesehen ist.

Die Erfindung umfasst gleichermaßen eine Filterpresse, die wenigstens eine, bevorzugt zwei oder mehr flächig nebeneinander angeordnete Filterplatten umfasst. Die Filterplatten beziehungsweise Filterplattenpaare sind dabei mit einem wie zuvor beschrieben ausgestatteten Filtertuch belegt beziehungsweise mit einer Filtertuchanordnung gemäß der Erfindung versehen.

In der Zeichnung ist die Erfindung insbesondere in einem Ausführungsbeispiel schematisch dargestellt. Es zeigen:
- Fig. 1: einen Schnitt durch eine Filterplatte in perspektivischer Darstellung
- Fig. 2: eine Schnittdarstellung durch die Filterplatte in Draufsicht
- Fig. 3: den in Fig. 2 mit III bezeichneten Bereich der Filterplatte in vergrößerter Darstellung
- Fig. 4: den in Fig. 2 mit IV bezeichneten Bereich der Filterplatte in vergrößerter Darstellung
- Fig. 5: eine Schnittdarstellung eines am Filtertuch angeordneten Wulstprofils in seitlicher Schnittdarstellung
- Fig. 6: in einer Draufsicht eine alternative Ausgestaltung der erfindungsgemäßen Filterplatte

In den Figuren sind gleiche oder einander entsprechende Elemente jeweils mit den gleichen Bezugszeichen bezeichnet und werden daher, sofern nicht zweckmäßig, nicht erneut beschrieben.

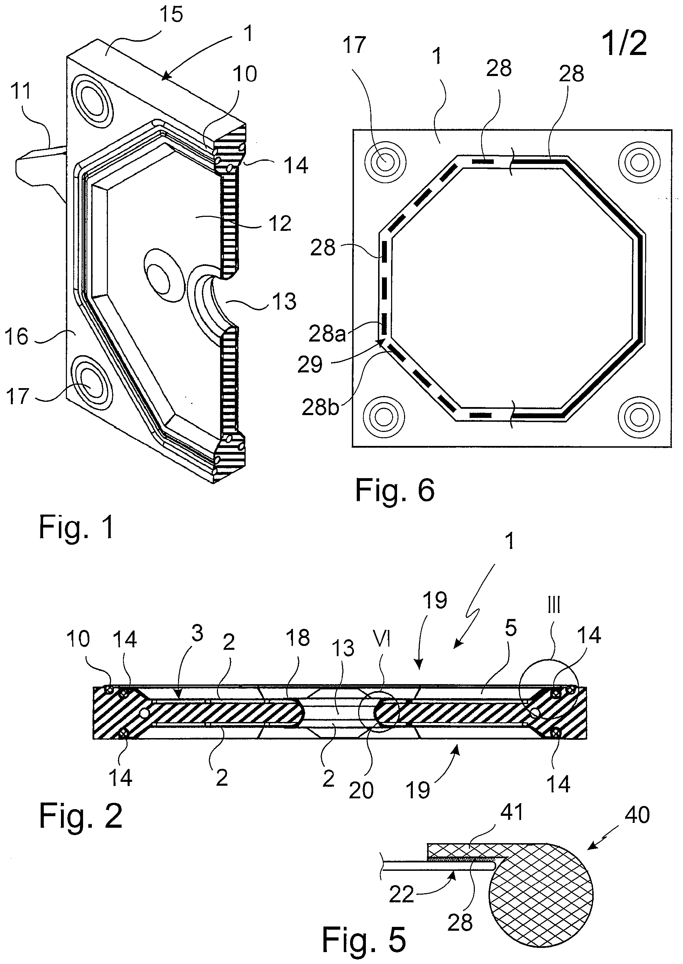

Fig. 1 zeigt eine bevorzugte Ausführungsform einer Filterplatte 1. Diese kann beispielsweise als Kammerplatte oder dergleichen ausgebildet sein und dient zur Aufnahme beziehungsweise zur Anordnung eines Filtertuches 2. Die Filterplatte 1 weist einen flächigen, mit dem Filtertuch belegbaren Bereich 12 auf. Daneben ist in der Filterplatte 1 eine zentrale Öffnung 13 vorgesehen, die den Zentraleinlauf für das zu filtrierende Medium darstellt. In dieser Öffnung 13 wird ein zylindrisches oder schlauchförmiges Filtertuch 2 als Tuchhals 20 eingelegt. Ein flächig auf dem Bereich 12 aufliegendes weiteres Filtertuch 2 ist dabei mit dem Tuchhals 20 insbesondere durch Verschweißen verbunden und bildet insgesamt ein die Filterplatte 1 bedeckendes Filtertuch 2 aus. Im Randbereich weist die Filterplatte 1 eine Dichtung 10 auf, über die nebeneinander liegende Filterplatten 1, in einer Filterpresse abgedichtet werden. Knapp unterhalb der Dichtung 10 befindet sich eine Nut 14, in die eine am Randbereich des Filtertuches 2 ausgebildete Wulst 21 eingesetzt wird. Daneben besteht auch die Möglichkeit, dass Bereiche des Filtertuches 2 übereinander gelegt werden, um diese zu verschweißen und um die Wulst 21 beziehungsweise einen Saum zu bilden, der dann in die Nut 14 eingesetzt werden kann. Es wird so eine Verbindung zwischen der Filterplatte 1 und dem Filtertuch 2 geschaffen. Aufgrund der nebeneinander angeordneten Filterplatten 1, wie diese in Filterpressen vorgesehen sind, werden die Wülste 21 in den Nuten 14 gehalten. Die Dichtung 10 verhindert ein Austreten der zu filtrierenden Flüssigkeiten oder Substanzen aus der Filterplattenanordnung.

In einer Filterpresse (nicht dargestellt) sind mehrere der in Fig. 1 dargestellten Filterplatten 1, nebeneinander beziehungsweise aneinandergereiht angeordnet. Die Filtertücher 2 sind hierzu um- beziehungsweise auf den Filterplatten 1 aufgespannt. Das Filtertuch 2 selbst dient dazu, Partikel aus den zu filtrierenden Flüssigkeiten zurückzuhalten. In der Filterpresse werden die Filterplatten 1 unter hohem Druck zusammengepresst und zwischen den Filterplatten 1 von innen nach außen die zu filtrierende Substanz gegen die Filtertücher 2 gepresst. Je nach Ausführung der Filterpresse verdichten sich die in der zu filtrierenden Substanz enthaltenen Partikel beziehungsweise der Schlamm kontinuierlich und bilden so im Zusammenwirken mit dem Filtertuch 2 das Filtermedium.

Die Öffnung 13 dient dazu, das zu filtrierende Medium zwischen den einzelnen Filterplatten 1 hindurchfließen zu lassen. Durch diese einströmende, unter Umständen mit abrasiven Partikeln versehene Flüssigkeit beziehungsweise das zu filtrierende Medium kommt es zu einer mechanischen Beaufschlagung insbesondere der in der Öffnung 13 liegenden Abschnitte des Filtertuches 2 sowie den herkömmlicherweise hier vorgesehenen Nähten. Gleiches gilt für die im Randbereich angeordneten Abschnitte des Filtertuches 2, sofern diese durch Nähte verbunden sind, um die Wulst 21 beziehungsweise einen Aufnahmeraum 24 zu bilden. Dies wird durch die Ausführungsform mit verschweißten Bereichen beziehungsweise Abschnitten des Filtertuchs 2 verhindert.

Die Filterplatte 1 weist an ihrer äußeren Randfläche 15 einen Vorsprung 11 auf. Dieser dient dazu, die Filterplatten 1 beim Aneinanderreihen in einer Filterpresse in eine geeignete Führung oder dergleichen einzuhängen. Für die eigentliche Filtrationsleistung der Filterplatte 1 hat dieser Vorsprung 11 keine Relevanz. Gleiches gilt für die beiden in den Eckbereichen 16 vorgesehenen Ausnehmungen 17. Diese dienen lediglich dazu, die Filterplatte 1 auf einer Führung oder dergleichen zu verschieben.

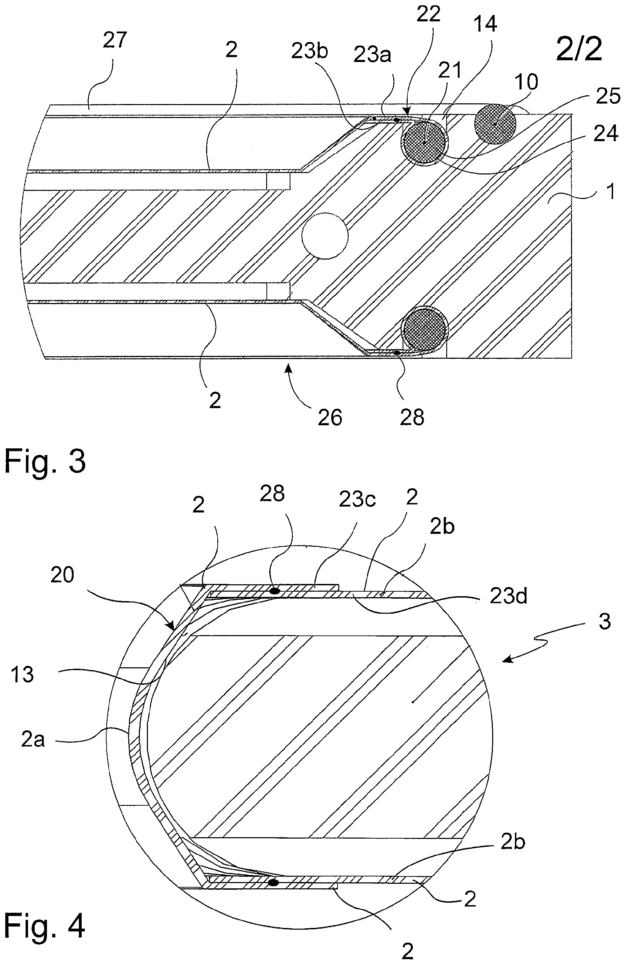

Fig. 2 zeigt die in der Fig. 1 in der Schnittdarstellung dargestellte Filterplatte 1 in Seitenansicht. Erkennbar ist in der Fig. 2 die an der Filterplatte 1 vorgesehene Filtertuchanordnung 3. Diese umfasst im wesentlichen drei Filtertücher 2 beziehungsweise Filtertuchbereiche. Ein erstes Filtertuch 2 ist in der Öffnung 13 eingelegt und überdeckt diese vollständig. Dieses zylinder- oder schlauchartig ausgebildete und in der Öffnung 13 angeordnete Filtertuch 2 ist verbunden mit den beiden beiderseits der Filterplatte 1 aufgelegten weiteren flächigen Filtertüchern 2. Eine Verbindung zwischen dem ersten, in der Öffnung 13 angeordneten Filtertuch 2 und den beiden beiderseits der Filterplatte 1 eine flächige Erstreckung aufweisenden Filtertüchern 2 erfolgte hierbei durch Verschweißen der übereinanderliegenden Abschnitte 18 von erstem und jeweils zweitem Filtertuch 1. Hierdurch wird verhindert, dass in den übereinanderliegenden Abschnitten 18 eine Naht oder dergleichen ausgebildet ist, die durch das durch die Öffnung 13 strömende, sich auf der Fläche der Filterplatte 1 verteilende abrasive Medium angreifbar wäre. Zudem erfolgt hier durch Verschweißen, keine Schwächung des Materials des Filtertuches 2, wie dies beispielsweise durch Durchstechen und Hindurchführen eines Fadens der Fall wäre. Eine detailliertere Darstellung der in Fig. 2 mit IV beziehungsweise III bezeichneten Bereiche findet sich in den Fig. 3 und 4, die im folgenden beschrieben werden. Erwähnenswert ist in Fig. 2 auch die in der Filterplatte 1 vorgesehene Nut 14, die in beiden Seiten 19 im Randbereich der Filterplatte 1 vorgesehen ist. Hier wird ein Wulst 21 oder ein sonstiger Vorsprung, der am Filtertuch 2 ausgebildet ist, eingepasst und schafft eine optimale Verbindung zwischen Filtertuch 2 und Filterplatte 1, auch im Randbereich.

Zusätzlich verfügt die Filterplatte 1 im Randbereich über eine auf einer Seite angeordnete Dichtung 10. Diese liegt bei Anordnung der Filterplatte 1 in einer Filterpresse auf der neben der hier dargestellten Filterplatte 1 angeordneten, weiteren Filter platte 1 auf und dichtet so die Filterplatten 1 beziehungsweise die aufeinanderliegenden Randbereiche gegeneinander ab.

Fig. 3 zeigt den in der Fig. 2 mit III bezeichneten Bereich der Filterplatte 1. Deutlich erkennbar ist hier die in dem Filtertuch 2 randseitig vorgesehene Wulst 21. Diese wird dadurch gebildet, dass im Randbereich 22 das Filtertuch 2 umgeschlagen wird und ein erster Filtertuchbereich 23a auf einem zweiten Filtertuchbereich 23b angeordnet wird. Die übereinanderliegenden Filtertuchbereiche 23a,b werden dann miteinander verbunden, insbesondere durch eine Schweißverbindung und es bildet sich dann die in Fig. 3 in einer in der Filterplatte 1 vorgesehenen Nut 14 aufgenommmene Wulst 21 aus. Die Ausbildung der Wulst 21 wird dadurch verbessert, dass durch Aufeinanderlegen und Verbinden der Filtertuchbereiche 23a,b ein Aufnahmeraum 24 gebildet wird, in dem dann, wie im Ausführungsbeispiel der Fig. 3 dargestellt, eine Kordel oder ein Aufnahmekörper 25 eingeführt oder eingelegt werden kann, die die Form der Wulst 21 definiert beziehungsweise stabilisiert und deren Einlegen in die Nut 14 wesentlich verbessert und begünstigt. Der Aufnahmekörper 25 kann auch aus separaten Abschnitten gebildet oder als einstückiger Körper beispielsweise als O-Ring zur Verfügung gestellt werden.

Das Filtertuch 2 erstreckt sich in Richtung des Zentrums der Filterplatte 1 (nicht dargestellt) und bedeckt den Filtrationsbereich der Filterplatte 1 vollständig. Auf der gegenüberliegenden zweiten Seite 26 der Filterplatte 1 ist ein identisch ausgebildetes Filtertuch 2 angeordnet, das die zweite Seite 26 vollständig bedeckt. Die Filterplatte 1 wie in Fig. 3 gezeigt, verfügt zusätzlich über eine Dichtung 10. Auf dieser liegt ein die Filterplatte 1 bedeckender Deckel 27 auf. Daneben besteht auch die Möglichkeit, dass sich an die erste Filterplatte 1 eine zweite Filterplatte 1 anschließt. Die Dichtung 10 dichtet dann den zwischen den Filterplatten 1 vorhandenen Raum randseitig ab. Es ist hierbei ausreichend, wenn eine Dichtung 10 lediglich auf einer Seite der Filterplatte 1 angeordnet ist, um mit der nachgeordnet angebrachten Filterplatte 1 zusammenzuwirken und die Filterplatten 1 gegeneinander abzudichten.

Die Verschweißung der übereinanderliegenden Filtertuchbereiche 23a, 23b wird begünstigt durch eine in dem Überlappungsbereich angebrachte Schweißverbindungsschicht 28 beziehungsweise einen hier aufgetragenen Schweißhilfsstoff. Es kann sich hierbei um ein zusätzliches auf das Material des Filtertuches 1 aufgebrachtes aktivierbares Material handeln, das eine dauerhafte und feste Verschweißung der Filtertuchbereiche 23 ermöglicht. Das Filtertuch 2 selbst kann auch aus einem thermoplastischen Werkstoff bestehen, wobei dann die Anordnung eines zusätzlichen Schweiß- oder Klebematerials beziehungsweise einer die Bildung einer Schweißverbindungsschicht 28 begünstigende Beschichtung oder Ausrüstung des Materials nicht notwendig ist, da die übereinanderliegenden Filtertuchbereiche 23a,b ohne weiteres, allein aufgrund der Eigenschaften des Werkstoffes, verbindbar sind. Es erfolgt zur Ausbildung der Verschweißung beispielsweise eine Hitzebeaufschlagung der übereinanderliegenden Filtertuchbereiche 23a,b.

Fig. 4 zeigt detailliert das in der Öffnung 13 der Filterplatte 1 angeordnete zylinder- oder schlauchförmige (erstes) Filtertuch 2, 2a das einen Tuchhals 20 ausbildet, der die Öffnung 13 vollständig überdeckt und hier eine ausreichend gute Filtrationsleistung sicherstellt. Der Tuchhals 20 ist im Ausführungsbeispiel der Fig. 4 mit den beiden Filtertüchern 2, 2b die sich flächig über die Filterplatte 1 erstrecken, verbunden. Auch hier erfolgte eine Verbindung durch Verschweißen. Vorgesehen ist zusätzlich die Anordnung einer Schweißverbindungsschicht 28 zwischen den zwischeneinanderliegenden Filtertuchbereichen 23c, 23d. Auf der Unterseite der in Fig. 4 dargestellten Filterplatte 1 ist eine identische Ausgestaltung der Verbindung von flächigem Filtertuch 2, 2a und den Tuchhals 20 ausbildendem Filtertuch 2,
2b vorgesehen, so dass beide Seiten der Filterplatte 1 mit Filtertuch 2 beziehungsweise einer Filtertuchanordnung 3 bedeckt sind. Aufgrund des Verschweißens werden hier keine Nähte oder dergleichen ausgebildet, die einen vorzeitigen Verschleiß der Filtertuchanordnung 3 bewirken würden. Die Haltbarkeit der Filtertuchanordnung 3 wird somit signifikant erhöht und die Kosten für die Herstellung und Wartung der Filterplatte 1 beziehungsweise einer damit ausgerüsteten Filterpresse (nicht dargestellt) verringert.

Das Material des den Tuchhals 20 bildenden ersten Filtertuches 2a kann gemäß der Erfindung gleichartig oder gleichwertig zu den flächig angeordneten beiden Filtertüchern 2b ausgeführt sein. Alternativ kann das im Tuchhals 20 verwendete Filtertuch 2a zum Beispiel auch mit einer geringeren Durchlässigkeit ausgestattet sein, die zum Beispiel durch eine abweichende oder ergänzende Ausrüstung oder Beschichtung erfolgen kann. Zum Beispiel ist es möglich, das Material des Tuchhalses 20 so auszurüsten, dass eine der Verschweißung dienende Beschichtung zur Verfügung gestellt wird, die dann in geeigneter Weise beim Verschweißen das Filtertuchgewebe der zweiten Filtertücher 2b umschließt und somit mechanisch stabil verbindet. Neben dem unter Umständen gewünschten verringerten Separationseffekt im Bereich des Tuchhalses 20 wird so auch in geeigneter Weise die Schweißverbindung 28 zur Verfügung gestellt.

Fig. 5 zeigt ein Wulstprofil 40, das an einem Randbereich 22 eines Filtertuches 2 alternativ zu einem Umschlagen des Randbereiches 22 angeordnet werden kann. Das Wulstprofil 40 verfügt über ein Verbindungselement 41 zum Anordnen des Wulstprofils 40 an dem Randbereich 22 des Filtertuches 2. Das Wulstprofil 40 besteht bevorzugt aus einem beispielsweise auch für den Aufnahmekörper 25 verwendbaren elastischen Material, insbesondere aus Gummi, Silikon oder einem elastischen Thermoplasten. Besteht auch das Filtertuch 2 aus einem vergleichbaren Material, so kann das Wulstprofil 40 beziehungsweise das daran angeordnete oder vorgesehene Verbindungselement 41 in einfacher Art und Weise mit dem Filtertuch 2 direkt verschweißt werden. Sofern es sich hierbei um nicht kompatible Materialien handelt, wird zwischen dem Verbindungselement 41 und dem Filtertuch 2 eine Klebebeziehungsweise Schweißverbindungsschicht 28 angeordnet, die nach entsprechender Aktivierung eine dauerhafte Verschweißung oder Verklebung von Wulstprofil 40 beziehungsweise Verbindungselement 41 und Filtertuch 2 bewirkt. Das Wulstprofil 40 wird dann in die an der Filterplatte 1 vorgesehene Nut 14 eingesetzt und schafft den Anschluss des Filtertuches 2 an der Filterplatte 1.

Alternativ zu dem in Fig. 5 dargestellten Verkleben oder Verschweißen des Wulstprofils 40 mit dem Filtertuch 2 kann dieses auch an dem Filtertuch 2 angenäht werden. Die Wulst beziehungsweise das Wulstprofil 40 weist in jedem Fall eine geeignete Geometrie auf, um unter allen Betriebsbedingungen die exakte Befestigung des Filtertuches 2 am Rand beziehungsweise im Randbereich der Filterplatte 1 beziehungsweise einer dort vorgesehenen Nut 14 zu gewährleisten.

In Fig. 6 ist eine erfindungsgemäße Filterplatte 1 dargestellt. Im Vergleich mit der Variante nach Fig. 1 ist hier kein Zentraleinlauf (innerhalb des Filterraumes 5) vorgesehen. Zu- und Ablauf werden über die in den Plattenecken angeordneten, die Filterplatte durchdringenden Ausnehmungen oder Öffnungen 13 zur Verfügung gestellt, es sind geeignete in der Platte 1 verlaufende Bohrungen vorgesehen, die den Filterraum 5 mit den Öffnungen 13, die von Platte zu Platte fluchten, verbinden.

Es ist klar, dass der als Zentraleinlauf dienende Öffnung 13 nicht zwigend im Mittelpunkt der Filterplatte 1 angeordnet ist, sondern zumindest innerhalb des Filterraumes 5 zum Beispiel also auch innerhalb der Dichtung 10 beziehungsweise des Saumes. Fig. 6 zeigt zwei verschiedene nach der Erfindung alternativ vorgeschlagene Varianten, wie die Schweißverbindungsschicht 28 ausgeführt ist. Im linken Bereich sind einzelne Klebeverbindungsschichten 28, 28a, 28b vorgesehen, die durch entsprechende Abstände 29 getrennt sind.

Im rechten Bereich nach Fig. 6 ist eine durchgehende Schweißverbindungsschicht 28 vorgesehen. Dementsprechend kann auch ein in dem im Randbereich gebildeten Aufnahmeraum 24 eingelegter Aufnahmekörper 25 ausgebildet werden.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, daß die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Filterplatte als Teil einer, aus zwei oder mehr flächig nebeneinander angeordneten Filterplatten bestehenden Filterpresse, wobei die Filterplatte ein Filtertuch trägt, wobei das Filtertuch aus einem Filtertuchgewebe besteht, welches in einem Flächenbereich derart umgeschlagen ist, dass ein erster Filtertuchbereich auf einem zweiten Filtertuchbereich angeordnet ist, wobei die beiden Filtertuchbereiche zumindest teilweise durch eine Schweißverbindung miteinander verbunden sind, **dadurch gekennzeichnet, dass** der umgeschlagene Flächenbereich des Filtertuches eine Befestigungszwecken dienende Wulst (21)bildet wobei dieser Wulst (21) in einer Nut der Filterplatte gehalten ist.

2. Filterplatte nach Anspruch 1, **dadurch gekennzeichnet, dass** als Flächenbereich der Randbereich des Filtertuches vorgesehen ist, wobei die beiden Filtertuchbereiche (23 a, b, c, d) bevorzugt durch zueinander beabstandet angeordnete, jeweils einzelne Schweißverbindungen (28) mit einander verbunden sind.

3. Filterplatte nach einem oder beiden der vorhergehenden Ansprüche, **gekennzeichnet durch** eine durchgehende Schweißverbindung (28).

4. Filterplatte nach einem der vorhergehenden Ansprüche, **dadurch gekennzeichnet, dass** das Filtertuch (2) in dem umgeschlagenen Flächenbereich (22) einen Aufnahmeraum (24) bildet, welcher zur Aufnahme mindestens eines, insbesondere auch elastischen Aufnahmekörpers (25) dient.

5. Filterplatte nach Anspruch 4, **dadurch gekennzeichnet, dass** der Aufnahmeraum (24) eine Vielzahl voneinander getrennter, wulstprofilartiger Aufnahmekörper (25) aufnimmt.

6. Filterplatte nach einem der vorhergehenden Ansprüche 4 oder 5, **dadurch gekennzeichnet, dass** der Aufnahmeraum (24) einen schlauchartigen oder einstückigen wulstprofilartigen Aufnahmekörper (25) aufweist.

7. Filterplatte nach Anspruch 1, **dadurch gekennzeichnet, dass** in der Wulst (21) ein schlauch- oder wulstprofilartiger Aufnahmekörper (25) aus einem elastischen Material, insbesondere aus Gummi, Silikon oder einem elastischen Thermoplast vorgesehen ist.

8. Filterplatte nach Anspruch 7, **dadurch gekennzeichnet, dass** der als schlauch- oder wulstprofilartiger Aufnahmekörper (25) aus einem Grundkörper besteht, dessen Dicke, zumindest in Richtung rechtwinklig zum flächigen Filtertuch (2) gesehen größer, insbesondere mindestens zweimal, bevorzugt mindestens dreibis viermal größer ist, als die Dicke eines Filtertuchgewebes.

9. Filterplatte nach einem der vorhergehenden Ansprüche, **dadurch gekennzeichnet, dass** das Filtertuch (2) oder ein Filtertuchgewebe aus einem thermoplastischen Werkstoff, insbesondere aus Polypropylen (PP), Polyethylenterephtalat (PET), Polyamid oder ähnlichen Stoffen und/oder aus organischen Fasern wie Baumwolle oder Glas- oder Kohlefasern und/oder Mischungen daraus besteht und eine insbesondere die Bildung einer Schweißverbindung (28) begünstigende Beschichtung oder Ausrüstung trägt.

10. Filterpresse, umfassend wenigstens eine, bevorzugt zwei oder mehr flächig nebeneinander angeordneten Filterplatten nach einem der vorhergehenden Ansprüche 1 bis 9 trägt.

## Claims

1. Filter plate as part of a filter press comprising two or more filter plates disposed two-dimensionally next to one another, wherein the filter plate carries a filter cloth, wherein the filter cloth is composed of a filter cloth fabric which is folded-over in a surface area such that a first filter cloth area is disposed on a second filter cloth area, wherein the two filter cloth areas are connected with one another at least partially by means of a welding connection, **characterised in that** the folded-over surface area of the filter cloth forms a bead (21) serving for fixing purposes wherein this bead (21) is held in a groove of the filter plate.

2. Filter plate according to claim 1, **characterised in that** as a surface area is provided the edge portion of the filter cloth, wherein the two filter cloth areas (23 a, b, c, d) are connected with one another preferably by means of respectively individual welding connections (28) disposed distanced from one another.

3. Filter plate according to one or both of the preceding claims, **characterised by** a continuous welding connection (28).

4. Filter plate according to any of the preceding claims, **characterised in that** the filter cloth (2) forms in the folded-over surface area (22) a reception space (24) which serves for the reception of at least one, in particular also elastic reception body (25).

5. Filter plate according to claim 4, **characterised in that** the reception space (24) receives a plurality of bead-profile-like reception bodies (25) separated from one another.

6. Filter plate according to any of the preceding claims 4 or 5, **characterised in that** the reception space (24) has a hose-like or integral bead-profile-like reception body (25).

7. Filter plate according to claim 1, **characterised in that** in the bead (21) is provided a hose-like or bead-profile-like reception body (25) made of an elastic material, in particular from rubber, silicone or an elastic thermoplastic.

8. Filter plate according to claim 7, **characterised in that in that** the hose-like or bead-profile-like reception body (25) consists of a basic body, the thickness of which, at least viewed in the direction at right angles to the two-dimensional filter cloth (2) is greater, in particular at least two times greater, preferably at least three to four times greater, than the thickness of a filter cloth fabric.

9. Filter plate according to any of the preceding claims, **characterised in that in that** the filter cloth (2) or a filter cloth fabric is made of a thermoplastic material, in particular of polypropylene (PP), polyethylene terephthalate (PET), polyamide or similar materials and/or of organic fibres such as cotton or glass fibres or carbon fibres and/or mixtures thereof and bears in particular a coating or finishing promoting the formation of a welding connection (28).

10. Filter plate comprising at least one, preferably two or more filter plates according to any of the preceding claims 1 to 9 disposed two-dimensionally next to one another.

## Revendications

1. Plaque filtrante faisant partie d'une presse filtrante se composant de deux plaques filtrantes agencées à plat l'une à côté de l'autre ou plus, dans laquelle la plaque filtrante porte une toile filtrante, dans laquelle la toile filtrante se compose d'un tissu de toile filtrante qui est rabattu dans une zone plate de telle manière qu'une première zone de toile filtrante soit agencée sur une seconde zone de toile filtrante, dans laquelle les deux zones de toile filtrante sont raccordées entre elles au moins partiellement par une liaison soudée, **caractérisée en ce que** la zone plate rabattue de la toile filtrante forme un bourrelet (21) servant à des fins de fixation, dans laquelle ce bourrelet (21) est maintenu dans une rainure de la plaque filtrante.

2. Plaque filtrante selon la revendication 1, **caractérisée en ce que** la zone de bord de la toile filtrante est prévue comme zone plate, dans laquelle les deux zones de toile filtrante (23 a, b, c, d) sont raccordées entre elles de préférence par des liaisons soudées (28) individuelles respectivement agencées de manière espacée les unes aux autres.

3. Plaque filtrante selon l'une quelconque ou les deux des revendications précédentes, **caractérisée par** une liaison soudée (28) continue.

4. Plaque filtrante selon l'une quelconque des revendications précédentes, **caractérisée en ce que** la toile filtrante (2) forme, dans la zone plate rabattue (22), un espace de réception (24) qui sert à la réception d'au moins un corps de réception en particulier également élastique (25).

5. Plaque filtrante selon la revendication 4, **caractérisée en ce que** l'espace de réception (24) reçoit une pluralité de corps de réception (25) de type profil de bourrelet séparés les uns des autres.

6. Plaque filtrante selon l'une quelconque des revendications 4 ou 5 précédentes, **caractérisée en ce que** l'espace de réception (24) présente un corps de réception (25) de type profil de bourrelet de type tuyau ou d'un seul tenant.

7. Plaque filtrante selon la revendication 1, **caractérisée en ce qu'**un corps de réception (25) de type tuyau ou profil de bourrelet en un matériau élastique, en particulier caoutchouc, silicone ou un thermoplaste élastique est prévu dans le bourrelet (21).

8. Plaque filtrante selon la revendication 7, **caractérisée en ce que** le corps de réception (25) de type tuyau ou profil de bourrelet se compose d'un corps de base, dont l'épaisseur est plus grande, au moins dans une vue dans la direction à angle droit par rapport à la toile filtrante (2) plate, en particulier au moins deux fois, de préférence au moins trois à quatre fois, plus grande que l'épaisseur d'un tissu de toile filtrante.

9. Plaque filtrante selon l'une quelconque des revendications précédentes, **caractérisée en ce que** la toile filtrante (2) ou un tissu de toile filtrante se compose d'un matériau thermoplastique, en particulier de polypropylène (PP), de polytéréphtalate d'éthylène (PET), de polyamide ou substances similaires et/ou de fibres organiques telles que le coton ou des fibres de verre ou carbone et/ou de mélanges de ceux-ci et porte un revêtement ou équipement favorisant en particulier la formation d'une liaison soudée (28).

10. Presse filtrante comprenant au moins une, de préférence deux, plaques filtrantes agencées à plat les unes à côté des autres ou plus selon l'une quelconque des revendications 1 à 9 précédentes.
